# EUROPEAN PATENT SPECIFICATION

(11) **EP 1 998 088 B1**
(45) Date of publication and mention of the grant of the patent: **07.04.2010**
(21) Application number: 07009298.6
(22) Date of filing: 09.05.2007
(51) Int. Cl.: F16J 15/32

(54) **Sealing ring**
Dichtungsring
Bague d'étanchéité

(43) Date of publication of application: 03.12.2008
(73) Proprietor: Carl Freudenberg KG, 69469 Weinheim (DE)
(72) Inventor: Fougerolle, Fabrice, 52200 Saint-Maurice (FR)

(56) References cited:
- EP-A2- 0 123 724
- US-A- 5 791 658
- US-B1- 6 428 013

## Description

### Technical area

The invention relates to a sealing ring with a sealing lip which, in a sealing manner, embraces a shaft to be sealed under radial preload, wherein the sealing lip has a surface profiling designed as return feed device on the side facing the shaft.

### Prior art

Sealing rings of this type are known from DE 199 04 862 C1. Because of the surface profiling on the side of the sealing lip facing the shaft to be sealed, the known sealing ring has very good dynamic tightness during operation with regard to fluids to be sealed. The surface geometry is more preferably suitable for delivering fluids such as lubricating oils to the chamber to be sealed. However, the surface profiling is not suitable for delivering gaseous fluids. To improve the static tightness, a sealing bead is provided at the free end of the sealing lip which enclosed in itself embraces the shaft to be sealed. The sealing bead holds back the medium to be sealed during a stoppage.

Document EP-A2-0 123 724 discloses a sealing ring according to the preamble of claim 1.

### Presentation of the invention

The invention is based on the object of developing a sealing ring having improved tightness with regard to gaseous fluids.

This object is solved with the features of claim 1. The sub-claims relate to advantageous developments.

To solve the object the sealing lip at its free end has at least a surrounding elevation which protrudes over the surface profiling. Accordingly, the elevation forms the smallest diameter of the sealing lip when the sealing lip is in contact with the shaft to be sealed. The elevation is designed so that it has a small face. A geometry ending in a point of the elevation is conceivable for example. This results in that the elevation is pressed against the shaft in a linear manner. Here, because of the shaping of the elevation, the contact surface is so small that no increase of the friction of the sealing Up on the shaft to speak of is obtained. However, the contact pressure is so high that the sealing lip has excellent tightness against gaseous fluids. Preferably the sealing lip is aligned so that it protrudes into the medium to be sealed. However, it is also conceivable to align the sealing lip in the direction of the surroundings. The sealing lip can consist of the known sealing materials such as natural rubber, fluor elastomers or PTFE.

The at least one elevation has a height of 0.01 to 0.5 mm. In this area the elevations are high enough to create high surface pressure without subjecting the elevations to excessive wear. The choice of height and also spacing of the elevations takes place as a function of the diameter of the shaft to be sealed.

At the free end of the sealing lip a circular sealing bead can be arranged. The sealing bead increases the contact pressure of the sealing lip against the shaft to be sealed. No additional coil spring is required to generate the necessary contact pressure of the sealing lip. In the area of the sealing bead no surface profiling is arranged, this ends before the sealing bead.

The sealing bead is able to embrace in a sealing manner the shaft to be sealed enclosed in itself. As a result, the sealing bead brings about static tightness.

The at least one elevation can be arranged on the sealing bead. As a result, static tightness is improved and the elevations are arranged in the area of the sealing lip at which the highest contact pressure of the sealing lip against the shaft occurs. Here, the elevations therefore achieve great tightness relative to gaseous fluids with lower friction.

The surface profiling can be formed through at least a spiral-shaped slot. Such slots are particularly well suited to feed liquid media back to the chamber to be sealed. Here, one or several slots can be provided.

Two surrounding elevations can be provided on the sealing bead. Through a further elevation the tightness against the gaseous media is improved yet again.

The distance of the elevations can be between 0.1 to 1.5 mm, wherein the elevations are preferably arranged centrally in the sealing bead. In this area the contact pressure of the elevations is highest. The elevations are inter-spaced so that each elevation on its own is tight against gases.

The at least one elevation can be designed triangular viewed in cross section. With such geometry, linear contact pressure of the elevation against the shaft is obtained. This results in high surface pressure and consequently great tightness with simultaneously low friction.

### Brief description of the drawing

Some exemplary embodiments of the sealing ring according to the invention are described in more detail in the following by means of the figures. These show, each schematically;
- Fig. 1: A sealing ring according to the invention;
- Fig. 2: In detail the free end of the sealing lip of a sealing ring according to Figure 1;
- Fig. 3: In detail another embodiment of the free end of the sealing lip;
- Fig. 4: In detail a further embodiment of the free end of the sealing lip;

### Embodiment of the invention

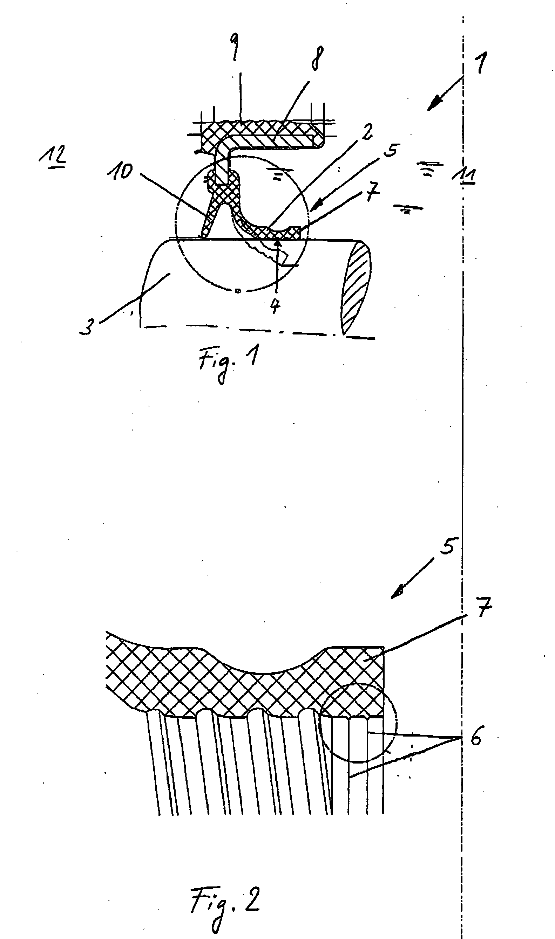

Figure 1 shows a sealing ring 1 with a sealing lip 2 which embraces in a sealing manner a shaft 3 to be sealed under radial preload. The sealing lip 2 is adhesively attached to a support ring 8, wherein a static seal 9 of an elastomer material is attached to the outer circumference side of the support ring. The sealing lip 2 is designed of uniform material and as one piece with a dust lip 10. The sealing lip 2 points in the direction of the chamber 11 to be sealed and the dust lip 10 points in the direction of the surroundings 12. The sealing lip 2 creates its contact pressure against the shaft 3 because of the resetting force of the material of the sealing lip 2 avoiding an additional coil spring. The sealing lip 2 on the side facing the shaft 3 has a surface profiling 4 designed as return feed device, wherein the surface profiling 4 consists of a spiral-shaped slot. At the free end 5 of the sealing lip a circular sealing bead 7 enclosed in itself is arranged. The sealing bead 7 locks the surface profiling 4 in the direction of the chamber 11 to be sealed. Here, the sealing bead 7 is only lifted for allowing the medium delivered through the surface profiling 4 to pass. A surrounding elevation 6 is arranged on the sealing bead 7 which protrudes beyond the surface profiling 4.

Figure 2 shows in detail the free end 5 of the sealing lip 2 of the sealing ring 1 according to Figure 1. It is shown that on the sealing bead 7 two surrounding elevations 6 are provided. The spacing of the two elevations 6 in this design amounts to 0.2 mm and their height is 0.03 mm. The elevations 6 in this design are triangular viewed in cross section.

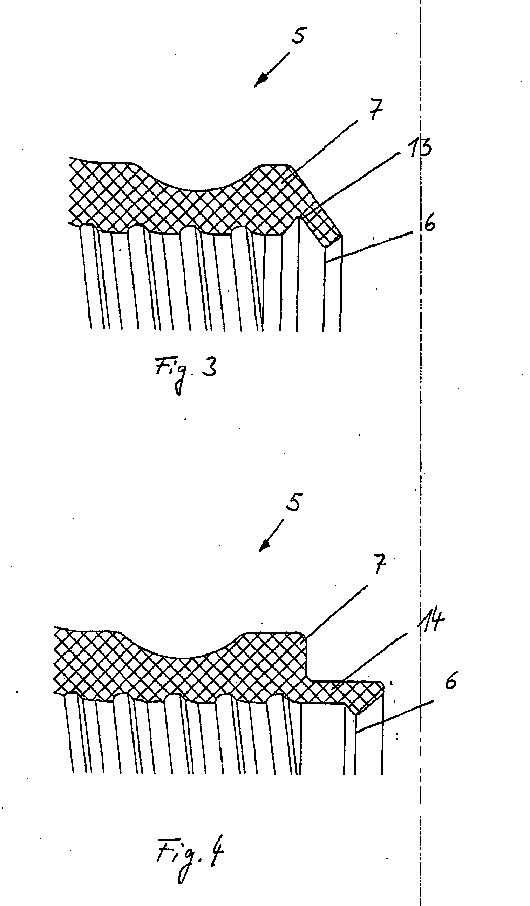

Figure 3 shows in detail a free end 5 of another embodiment of the sealing lip 3 for a sealing ring 1 according to Figure 1. In this embodiment the elevation 6 is arranged at the sealing bead 7 via a hinge 13. Thereby the elevation 6 is flexible supported and is moveable in radial direction. The hinge 13 acts like a spring.

Figure 4 shows in detail a free end 5 of a further embodiment of the seating lip 3 for a sealing ring 1 according to Figure 1, In this embodiment the elevation 6 is arranged at a cylindrical extension 14 which is fixed at the free end of the sealing bead 7. The extension allows an elastic radial movement of the elevation 6. The elevation 6 is directly integrated in the lip design, In other embodiments the elevation 6 can be a separate part and can fix in an elastic manner either on the main lip or on any other location of the seal.

## Claims

1. A sealing ring (1) with a sealing lip (2) which embraces in a sealing manner a shaft (3) to be sealed under radial preload, herein the sealing lip (2) has a surface profiling (4) designed as return feed device on the side facing the shaft (3), whereby the sealing lip (2) at its free end (5) has at least a surrounding elevation (6) which protrudes beyond the surface profiling (4), **characterized in that** the at least one elevation (6) has a height of 0.01 to 0.5 mm.

2. The sealing ring according to claim 1, **characterized in that** at the free end (5) of the sealing lip (2) a circular sealing bead (7) is arranged.

3. The sealing ring according to claim 2, **characterized in that** the sealing bead (7) embraces in a sealing manner the shaft (3) to be sealed enclosed in itself.

4. The sealing ring according to claim 2 or 3, **characterized in that** the at least one elevation (6) is arranged on the sealing bead (7).

5. The sealing ring according to any one of the claims 1 to 4, **characterized in that** the surface profiling (4) is formed through at least a spiral-shaped slot.

6. The sealing ring according to any one of the claims 1 to 5, **characterized in that** two surrounding elevations (6) are provided on the sealing bead (7).

7. The sealing ring according to claim 6, **characterized in that** the spacing of the elevations (6) is between 0.1 to 1.5 mm.

8. The sealing ring according to any one of the claims 1 to 7, **characterized in that** the at least one elevation (6) is of triangular design viewed in cross section.

## Patentansprüche

1. Dichtungsring (1) mit einer Dichtlippe (2), die eine unter radialer Vorbelastung abzudichtende Welle (3) abdichtend umfasst, wobei die Dichtlippe (2) ein Oberflächenprofil (4) aufweist, das als eine Rückführvorrichtung auf der der Welle (3) zugewandten Seite ausgeführt ist, wobei die Dichtlippe (2) an ihrem freien Ende (5) mindestens eine Umfangserhöhung (6) aufweist, die über das Oberflächenprofil (4) hinwegragt, **dadurch gekennzeichnet, dass** die mindestens eine Erhöhung (6) eine Höhe von 0,01 bis 0,5 mm aufweist.

2. Dichtungsring nach Anspruch 1, **dadurch gekennzeichnet, dass** am freien Ende (5) der Dichtlippe (2) ein kreisförmiger Dichtungswulst (7) angeordnet ist.

3. Dichtungsring nach Anspruch 2, **dadurch gekennzeichnet, dass** der Dichtungswulst (7) die abzudichtende Welle (3) in sich selbst geschlossen abdichtend umfasst.

4. Dichtungsring nach Anspruch 2 oder 3, **dadurch gekennzeichnet, dass** die mindestens eine Erhöhung (6) am Dichtungswulst (7) angeordnet ist.

5. Dichtungsring nach einem der Ansprüche 1 bis 4, **dadurch gekennzeichnet, dass** das Oberflächenprofil (4) durch mindestens einen spiralförmigen Schlitz gebildet wird.

6. Dichtungsring nach einem der Ansprüche 1 bis 5, **dadurch gekennzeichnet, dass** zwei Umfangserhöhungen (6) am Dichtungswulst (7) vorgesehen sind.

7. Dichtungsring nach Anspruch 6, **dadurch gekennzeichnet, dass** der Abstand der Erhöhungen (6) zwischen 0,1 bis 1,5 mm liegt.

8. Dichtungsring nach einem der Ansprüche 1 bis 7, **dadurch gekennzeichnet, dass** die mindestens eine Erhöhung (6) im Querschnitt betrachtet dreieckig ausgeführt ist.

## Revendications

1. Bague d'étanchéité (1), comprenant une lèvre d'étanchéité (2) qui embrasse, de manière hermétique, un arbre (3) à sceller sous précontrainte radiale, la lèvre d'étanchéité (2) ayant un profilage de surface (4) conçu sous forme de dispositif d'alimentation en retour sur le côté tourné vers l'arbre (3), la lève d'étanchéité (2) ayant, à son extrémité libre (5), au moins une élévation périphérique (6) qui fait saillie au-delà du profilage de surface (4), **caractérisée en ce que** l'au moins une élévation (6) a une hauteur de 0,01 à 0,5 mm.

2. Bague d'étanchéité selon la revendication 1, **caractérisée en ce qu'**un bourrelet d'étanchéité circulaire (7) est disposé à l'extrémité libre (5) de la lèvre d'étanchéité (2).

3. Bague d'étanchéité selon la revendication 2, **caractérisée en ce que** le bourrelet d'étanchéité (7) embrasse, de manière hermétique, l'arbre (3) à sceller qu'il renferme.

4. Bague d'étanchéité selon la revendication 2 ou 3, **caractérisée en ce que** l'au moins une élévation (6) est agencée sur le bourrelet d'étanchéité (7).

5. Bague d'étanchéité selon l'une quelconque des revendications 1 à 4, **caractérisée en ce que** le profilage de surface (4) est formé par au moins une fente en forme de spirale.

6. Bague d'étanchéité selon l'une quelconque des revendications 1 à 5, **caractérisée en ce que** deux élévations périphériques (6) sont prévues sur le bourrelet d'étanchéité (7).

7. Bague d'étanchéité selon la revendication 6, **caractérisée en ce que** l'espacement des élévations (6) est compris entre 0,1 et 1,5 mm.

8. Bague d'étanchéité selon l'une quelconque des revendications 1 à 7, **caractérisée en ce que** l'au moins une élévation (6) a une forme triangulaire vue en section transversale.
